# EUROPÄISCHE PATENTSCHRIFT

(11) **EP 3 727 728 B1**
(45) Veröffentlichungstag und Bekanntmachung des Hinweises auf die Patenterteilung: **25.10.2023**
(21) Anmeldenummer: 18811879.8
(22) Anmeldetag: 11.12.2018
(51) Int. Cl.: B23B 51/04, B28D 1/04

(54) **SCHNEIDABSCHNITT FÜR EINE BOHRKRONE**
CUTTING SECTION FOR A CORE BIT
SECTION DE COUPE POUR UNE COURONNE DE FORAGE

(30) Priorität: 21.12.2017 EP 17209446
(43) Veröffentlichungstag der Anmeldung: 28.10.2020
(73) Patentinhaber: Hilti Aktiengesellschaft, 9494 Schaan (LI)
(72) Erfinder: SCHROEDER, Florian, 7304 Maienfeld (CH); DOMANI, Guenter, 88138 Weissensberg (DE); RONG, Pingyan, 6800 Feldkirch (AT)
(74) Vertreter: Hilti Aktiengesellschaft Corporate Intellectual Property
(86) Internationale Anmeldenummer: PCT/EP2018/084285
(87) Internationale Veröffentlichungsnummer: WO 2019/121138

(56) Entgegenhaltungen:
- EP-A1- 0 480 263
- EP-A1- 2 289 656
- WO-A1-2014/096359
- GB-A- 1 583 860
- JP-A- 2007 136 643

## Beschreibung

### Technisches Gebiet

Die vorliegende Erfindung betrifft einen Schneidabschnitt für eine Bohrkrone gemäß dem Oberbegriff des Anspruchs 1. Ein solcher Schneidabschnitt ist aus der WO 2014/096359 A1 bekannt.

### Stand der Technik

WO 2014/096359 A1 offenbart einen Schneidabschnitt für eine Bohrkrone, der mit einem Bohrschaftabschnitt der Bohrkrone über eine lösbare Verbindungseinrichtung verbindbar ist. Dabei ist die lösbare Verbindungseinrichtung als kombinierte Steck-Dreh-Verbindung ausgebildet. Als "Steck-Dreh-Verbindung" werden lösbare Verbindungen zwischen einem ersten und zweiten Verbindungselement bezeichnet, die in einer Richtung eine Steckverbindung bilden und zusätzlich über eine Drehverbindung verbunden werden. Der Schneidabschnitt umfasst eine oder mehrere Bohrsegmente, einen Ringabschnitt, ein äusseres Steckelement und eine ringförmige Anschlagschulter am Übergang vom Ringabschnitt zum äusseren Steckelement.

Schneidabschnitte, die mit einer kombinierten Steck-Dreh-Verbindung verbindbar sind, werden unter dem Produktnamen "Hilti DD X-CM" vertrieben. Die Schneidabschnitte "Hilti DD X-CM" umfassen mehrere Bohrsegmente, einen Ringabschnitt und ein äusseres Steckelement, wobei sich am Übergang vom Ringabschnitt zum äusseren Steckelement eine ringförmige Anschlagschulter für die Kraftübertragung befindet. Die Drehmomentübertragung erfolgt mithilfe von Stiftelementen, die mit schlitzförmigen Ausnehmungen im äusseren Steckelement zusammenwirken. Die Schneidabschnitte "Hilti DD X-CM" werden aus einem geschlossenen Rohrelement gefertigt. Dabei wird die ringförmige Anschlagschulter durch Drehbearbeitung erzeugt und die schlitzförmigen Ausnehmungen werden durch Fräsbearbeitung erzeugt. Nachteilig am Aufbau der bekannten Schneidabschnitte "Hilti DD X-CM" sind der hohe Fertigungsaufwand durch die Drehbearbeitung der ringförmigen Anschlagschulter und die Fräsbearbeitung der schlitzförmigen Ausnehmungen. Ausserdem ist die Materialauswahl für den Ringabschnitt und das äussere Steckelement eingeschränkt. Da die Schneidabschnitte "Hilti DD X-CM" aus einem geschlossenen Rohrelement gefertigt werden, muss hinsichtlich der Anforderungen an den Schneidabschnitt bezüglich Kraftübertragung, Drehmomentübertragung und Zugbelastungen beim Entfernen einer verklemmten Bohrkrone ein Kompromiss bei der Materialauswahl getroffen werden.

GB 1 583 860 A offenbart eine Bohrkrone mit einem Bohrschaft und mehreren Bohrsegmenten, die am Bohrschaft befestigt sind, wobei der Bohrschaft aus einem oder mehreren Blechteilen hergestellt wird. Die Idee der GB 1 583 860 A besteht darin, die Wandstärke des Bohrschaftes, die mit zunehmendem Durchmesser ebenfalls zunimmt, aus mehreren dünnen Blechteilen oder mehreren Blechlagen eines Blechteils zu erzeugen. Der Bohrschaft kann aus einem ersten Blechteil und einem zweiten Blechteil hergestellt werden, die zu einem ersten offenen Rohrelement und einem zweiten offenen Rohrelement umgeformt werden. Wenn das zweite offene Rohrelement den gewünschten Durchmesser aufweist, wird das erste offene Rohrelement im Bereich seiner Enden mit dem zweiten offenen Rohrelement verbunden und das zweite offene Rohrelement wird im Bereich seiner Enden mit dem ersten offenen Rohrelement verbunden.

EP 0 480 263 A1 offenbart eine Hohlbohrkrone mit einem Schneidabschnitt, der über eine lösbare Verbindungseinrichtung mit einem Bohrschaftabschnitt der Bohrkrone zu verbinden ist. Der Schneidabschnitt besteht aus einem ersten geschlossenen Rohrelement, an dem die Bohrsegmente befestigt sind. Der Bohrschaftabschnitt besteht aus einem zweiten geschlossenen Rohrelement. Im verbundenen Zustand bilden sich zwischen dem ersten und zweiten geschlossenen Rohrelement mehrere Kanäle, über die Kühl- und Spülflüssigkeit an die Bohrsegmente zugeführt und Bohrklein aus dem Bohrspalt abgeführt werden kann. Der aus EP 0 480 263 A1 bekannte Schneidabschnitt unterscheidet sich im Aufbau grundsätzlich von dem Schneidabschnitt der WO 2014/096359 A1.

### Darstellung der Erfindung

Die Aufgabe der vorliegenden Erfindung besteht darin, die Funktionalität des aus der WO 2014/096359 A1 bekannten Schneidabschnittes beim Bohren im Hinblick auf Kraftübertragung und Drehmomentübertragung sowie Zugbelastungen beim Entfernen einer verklemmten Bohrkrone zu verbessern. Außerdem soll der Fertigungsaufwand bei der Herstellung des Schneidabschnittes reduziert werden.

Diese Aufgabe wird bei dem eingangs genannten Schneidabschnitt für eine Bohrkrone erfindungsgemäß durch die Merkmale des unabhängigen Anspruchs 1 gelöst. Vorteilhafte Weiterbildungen sind in den abhängigen Ansprüchen angegeben.

Der Schneidabschnitt ist für eine Bohrkrone vorgesehen und ist über eine lösbare Verbindungseinrichtung, die mindestens eine schlitzförmige Ausnehmung umfasst, mit einem Bohrschaftabschnitt der Bohrkrone verbindbar. Der Schneidabschnitt weist auf:
▪ ein erstes Rohrelement, das in Form eines ersten Hohlzylinders mit einer ersten äusseren Mantelfläche, einer ersten inneren Mantelfläche, einer ersten unteren Stirnfläche und einer ersten oberen Stirnfläche ausgebildet ist und das eine erste Hohlzylinderhöhe, einen ersten Innendurchmesser und einen ersten Aussendurchmesser aufweist,
▪ ein zweites geschlossenes Rohrelement, das in Form eines zweiten Hohlzylinders mit einer zweiten äusseren Mantelfläche, einer zweiten inneren Mantelfläche, einer zweiten unteren Stirnfläche und einer zweiten oberen Stirnfläche ausgebildet ist und das eine zweite Hohlzylinderhöhe, einen zweiten Innendurchmesser und einen zweiten Aussendurchmesser aufweist, wobei der erste Aussendurchmesser grösser oder gleich dem zweiten Innendurchmesser ist, und
▪ ein oder mehrere Bohrsegmente,
wobei das eine oder die mehreren Bohrsegmente mit dem ersten offenen Rohrelement und dem zweiten geschlossenen Rohrelement verbunden sind.

Erfindungsgemäß ist vorgesehen, dass das erste Rohrelement in das zweite geschlossene Rohrelement eingeschoben ist und das erste Rohrelement offen ausgebildet ist.

Der erfindungsgemäße Schneidabschnitt umfasst ein erstes offenes Rohrelement, ein zweites geschlossenes Rohrelement und mindestens ein Bohrsegment. Das erste offene Rohrelement ist in Form eines ersten Hohlzylinders ausgebildet und umfasst eine erste äussere Mantelfläche, eine erste innere Mantelfläche, eine erste untere Stirnfläche und eine erste obere Stirnfläche. Das zweite geschlossene Rohrelement ist in Form eines zweiten Hohlzylinders ausgebildet und umfasst eine zweite äussere Mantelfläche, eine zweite innere Mantelfläche, eine zweite untere Stirnfläche und eine zweite obere Stirnfläche. Um den Schneidabschnitt fertigzustellen, werden das erste offene Rohrelement und das zweite geschlossene Rohrelement ineinandergesteckt und das eine oder die mehreren Bohrsegmente werden mit dem ersten offenen Rohrelement und mit dem zweiten geschlossenen Rohrelement verbunden. Im Hinblick auf die Stabilität des Schneidabschnittes ist es vorteilhaft, wenn die Bohrsegmente mit dem ersten offenen Rohrelement und dem zweiten geschlossenen Rohrelement verbunden sind. Dabei können die Bohrsegmente mit dem ersten offenen Rohrelement und dem zweiten geschlossenen Rohrelement verschweißt, verlötet, verschraubt oder in einer anderen geeigneten Befestigungsart verbunden werden.

Der Schneidabschnitt ist so aufgebaut, dass die Kraftübertragung von einem Bohrschaftabschnitt über das erste offene Rohrelement auf die Bohrsegmente und die Drehmomentübertragung vom Bohrschaftabschnitt über das zweite geschlossene Rohrelement auf die Bohrsegmente erfolgt. Die erste obere Stirnfläche des ersten offenen Rohrelementes bildet eine ringförmige Anschlagschulter, die zur Kraftübertragung verwendet wird. Der Bohrschaftabschnitt überträgt die Kraft mittels einer ringförmigen Stirnfläche auf die ringförmige Anschlagschulter. Die Drehmomentübertragung erfolgt beispielsweise über Stiftelemente des Bohrschaftabschnittes, die mit schlitzförmigen Ausnehmungen im zweiten geschlossenen Rohrelement zusammenwirken. Durch die Trennung des Schneidabschnittes in das erste offene Rohrelement und das zweite geschlossene Rohrelement können die unterschiedlichen Anforderungen an den Schneidabschnitt im Hinblick auf die Kraftübertragung und Drehmomentübertragung berücksichtigt werden.

Die mindestens eine schlitzförmige Ausnehmung ist Teil der lösbaren Verbindungseinrichtung, die den Schneidabschnitt mit einem Bohrschaftabschnitt der Bohrkrone verbindet. Die schlitzförmige Ausnehmung ist in T-Form oder L-Form ausgebildet und ermöglicht im verbundenen Zustand der Bohrkrone eine Relativbewegung zwischen dem Schneidabschnitt und dem Bohrschaftabschnitt. Durch die Relativbewegung zwischen dem Schneidabschnitt und dem Bohrschaftabschnitt kann ein verklemmter Schneidabschnitt aus dem Untergrund gelöst werden.

Durch die Trennung des Schneidabschnittes in das erste offene Rohrelement und das zweite geschlossene Rohrelement kann außerdem der Fertigungsaufwand für die Herstellung des Schneidabschnittes reduziert werden. Die erste obere Stirnfläche bildet die ringförmige Anschlagschulter für die Kraftübertragung, so dass eine Drehbearbeitung entfällt. Das erste offene Rohrelement und das zweite geschlossene Rohrelement sind als Hohlzylinder mit kreisringförmigen Querschnitten ausgebildet und weisen konstante Materialstärken auf. Das erste offene Rohrelement kann aus einem ersten ebenen Blechteil hergestellt werden, das zum ersten offenen Rohrelement umgeformt wird. Das zweite geschlossene Rohrelement kann aus einem zweiten ebenen Blechteil hergestellt werden, das zu einem zweiten offenen Rohrelement umgeformt wird und an zweiten Stosskanten stoffschlüssig oder formschlüssig verbunden wird.

Das erste offene Rohrelement hat den Vorteil, dass die erste äussere Mantelfläche des ersten offenen Rohrelementes mit der zweiten inneren Mantelfläche des zweiten geschlossenen Rohrelementes in Kontakt steht. Wenn die erste äussere Mantelfläche und die zweite innere Mantelfläche in Kontakt sind, können die Bohrsegmente mit einer Schweißnaht mit dem ersten offenen Rohrelement und dem zweiten geschlossenen Rohrelement verbunden werden.

Bevorzugt sind die erste untere Stirnfläche des ersten offenen Rohrelementes und die zweite untere Stirnfläche des zweiten geschlossenen Rohrelementes bündig ausgerichtet. Die bündige Ausrichtung der ersten unteren Stirnfläche und der zweiten unteren Stirnfläche hat den Vorteil, dass eine breite Anbindungsfläche für die Bohrsegmente entsteht, an der die Bohrsegmente mit dem ersten offenen Rohrelement und dem zweiten geschlossenen Rohrelement verbunden werden können.

Besonders bevorzugt sind das eine oder die mehreren Bohrsegmente mit der ersten unteren Stirnfläche und der zweiten unteren Stirnfläche verbunden. Durch die bündige Ausrichtung der ersten unteren Stirnfläche und der zweiten unteren Stirnfläche entsteht eine breite Anbindungsfläche für die Bohrsegmente. Wenn die Bohrsegmente mit der ersten unteren Stirnfläche und der zweiten unteren Stirnfläche verbunden werden, können das erste offene Rohrelement und das zweite geschlossene Rohrelement gleichzeitig miteinander verbunden werden. Wenn die Bohrsegmente gleichzeitig mit dem ersten offenen Rohrelement und zweiten geschlossenen Rohrelement verbunden werden, kann der Fertigungsaufwand reduziert werden. Abhängig von den verwendeten Materialstärken kann es erforderlich sein, dass das erste offene Rohrelement und das zweite geschlossene Rohrelement zusätzlich miteinander verbunden werden. Sollten höhere Widerstandsmomente erforderlich sein, können das erste offene Rohrelement und das zweite geschlossene Rohrelement zusätzlich miteinander verbunden werden.

Besonders bevorzugt weist das zweite geschlossene Rohrelement in der zweiten inneren Mantelfläche mindestens eine Quernut auf, die auf Höhe des Verbindungsschlitzes der schlitzförmigen Ausnehmung angeordnet ist. Die mindestens eine Quernut ist Teil der lösbaren Verbindungseinrichtung, die den Schneidabschnitt mit einem Bohrschaftabschnitt der Bohrkrone verbindet. Die Breite der Quernut ist grösser oder gleich der Breite des Querschlitzes der schlitzförmigen Ausnehmung. In die Quernut des Schneidabschnittes greift eine passende Quernase eines Bohrschaftabschnittes ein. Die Quernut und Quernase bilden eine zusätzliche formschlüssige Verbindung, die verhindert, dass die Steck-Dreh-Verbindung beim Lösen einer verklemmten Bohrkrone unbeabsichtigt geöffnet wird und der Bohrschaftabschnitt ohne Schneidabschnitt aus dem Untergrund entfernt wird.

Bevorzugt weist das erste offene Rohrelement in der ersten inneren Mantelfläche mindestens eine Innenvertiefung auf, die sich über die erste Hohlzylinderhöhe erstreckt. Die mindestens eine Innenvertiefung in der ersten inneren Mantelfläche kann einen Transportkanal für eine Kühl- und Spülflüssigkeit bilden und ermöglicht die Ausbildung von Schneidabschnitten mit geringen Innenüberständen der Bohrsegmente auf der Innenseite des Schneidabschnittes. Die Breite, Tiefe, Form und/oder Anzahl der Innenvertiefung werden an die benötigte Flüssigkeitsmenge der Kühl- und Spülflüssigkeit angepasst.

In einer bevorzugten Weiterentwicklung ist das erste offene Rohrelement aus einem ersten Material und das zweite geschlossene Rohrelement aus einem zweiten Material ausgebildet. Der erfindungsgemäße Schneidabschnitt ist so aufgebaut, dass die Kraftübertragung auf den Schneidabschnitt über das erste offene Rohrelement und die Drehmomentübertragung auf den Schneidabschnitt über das zweite geschlossene Rohrelement erfolgt. Durch die Trennung des Schneidabschnittes in das erste offene Rohrelement und das zweite geschlossene Rohrelement kann die Auswahl des ersten Materials für das erste geschlossene Rohrelement und des zweiten Materials für das zweite geschlossene Rohrelement an die unterschiedlichen Anforderungen an den Schneidabschnitt im Hinblick auf die Kraftübertragung und Drehmomentübertragung angepasst werden. Außerdem kann das zweite Material im Hinblick auf Zugbelastungen beim Entfernen einer verklemmten Bohrkrone angepasst werden.

Bevorzugt ist das erste offene Rohrelement als erstes umgeformtes Blechteil ausgebildet. Die Verwendung eines ersten umgeformten Blechteils ermöglicht die Herstellung des ersten offenen Rohrelementes aus ebenen Blechteilen. Das erste offene Rohrelement kann aus einem ersten Blechteil hergestellt werden, das zum ersten offenen Rohrelement umgeformt wird. Als Umformverfahren für das erste Blechteil eignen sich Kaltumformverfahren und Warmumformverfahren.

Bevorzugt ist das zweite geschlossene Rohrelement als zweites umgeformtes Blechteil ausgebildet ist. Die Verwendung eines zweiten umgeformten Blechteils ermöglicht die Herstellung des zweiten geschlossenen Rohrelementes aus ebenen Blechteilen. Das zweite geschlossene Rohrelement kann aus einem zweiten Blechteil hergestellt werden, das zu einem zweiten offenen Rohrelement umgeformt wird und an den zweiten Stosskanten verbunden wird. Die mindestens eine schlitzförmige Ausnehmung kann im zweiten Blechteil beispielsweise durch Stanzen oder Ausschneiden erzeugt werden. Als Umformverfahren für das zweite Blechteil eignen sich Kaltumformverfahren und Warmumformverfahren. Die Verbindung der zweiten Stosskanten kann stoffschlüssig oder formschlüssig erfolgen, wobei die Stosskanten von Rohrelementen üblicherweise stoffschlüssig durch Schweißen verbunden werden. Neben der stoffschlüssigen Verbindung können die zweiten Stosskanten formschlüssig verbunden werden.

Besonders bevorzugt weist das zweite umgeformte Blechteil an gegenüberliegenden Seiten mindestens ein zweites positives Formschlusselement und mindestens ein entsprechendes zweites negatives Formschlusselement auf, wobei das mindestens eine zweite positive Formschlusselement und das mindestens eine zweite negative Formschlusselement beim zweiten geschlossenen Rohrelement formschlüssig verbunden sind. Die Verbindung der zweiten Stosskanten über zweite Formschlusselemente hat den Vorteil, dass kein Wärmeeintrag in das zweite offene Rohrelement erfolgt, der zu Spannungen im zweiten geschlossenen Rohrelement führen kann.

Der erfindungsgemäße Schneidabschnitt für eine Bohrkrone ist für eine Verbindung mit einem Bohrschaftabschnitt der Bohrkrone vorgesehen. Die Erfindung betrifft weiterhin eine Bohrkrone mit einem Schneidabschnitt und einem Bohrschaftabschnitt, wobei der Schneidabschnitt und der Bohrschaftabschnitt über eine lösbare Verbindungseinrichtung verbindbar sind.

### Ausführungsbeispiele

Ausführungsbeispiele der Erfindung werden nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematischer und/oder leicht verzerrter Form ausgeführt. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die allgemeine Idee der Erfindung ist nicht beschränkt auf die exakte Form oder das Detail der im Folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei gegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Es zeigen:
- FIGN. 1A,: B eine Bohrkrone mit einem erfindungsgemäßen Schneidabschnitt und einem Bohrschaftabschnitt, die über eine lösbare Verbindungseinrichtung verbindbar sind, in einem unverbundenen Zustand der Bohrkrone (FIG. 1A) und in einem verbundenen Zustand der Bohrkrone (FIG. 1B); und
- FIGN. 2A-C: den erfindungsgemäßen Schneidabschnitt der FIG. 1 bestehend aus einem ersten offenen Rohrelement, einem zweiten geschlossenen Rohrelement und mehreren Bohrsegmenten in einem Längsschnitt entlang der Schnittlinie A-A in FIG. 1A.

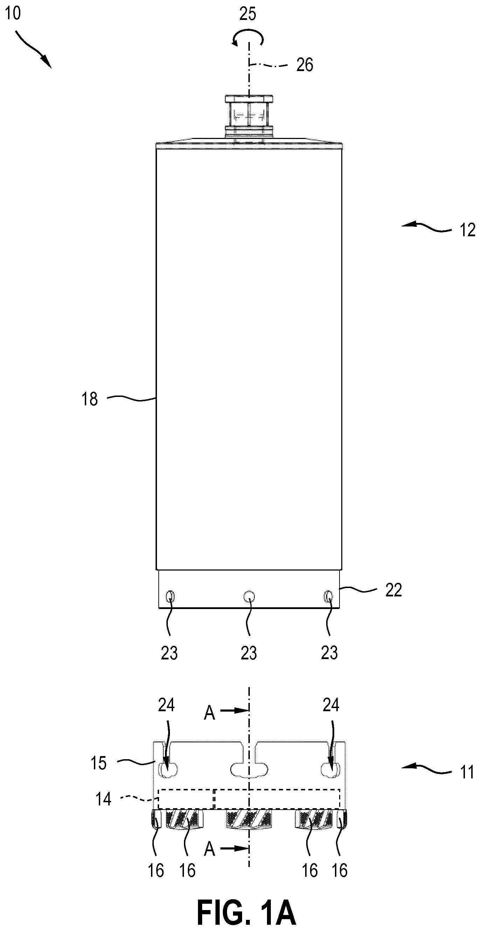

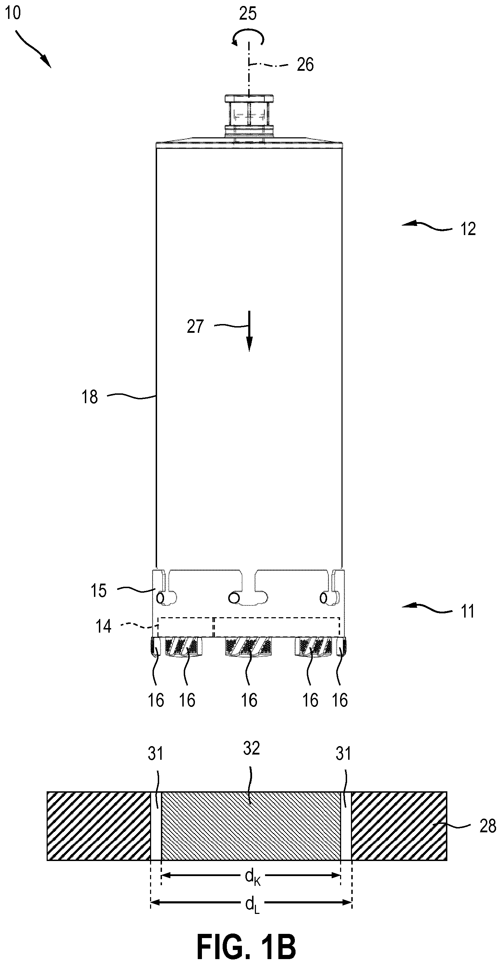

**FIGN. 1A****, B** zeigen eine Bohrkrone **10**, die einen erfindungsgemäßen Schneidabschnitt **11** und einen Bohrschaftabschnitt **12** umfasst, wobei der Schneidabschnitt 11 und der Bohrschaftabschnitt 12 über eine lösbare Verbindungseinrichtung **13** verbindbar sind. Dabei zeigt FIG. 1A den Schneidabschnitt 11 und Bohrschaftabschnitt 12 in einem unverbundenen Zustand der Bohrkrone und FIG. 1B zeigt den Schneidabschnitt 11 und Bohrschaftabschnitt 12 in einem verbundenen Zustand der Bohrkrone.

Der Schneidabschnitt 11 umfasst ein erstes offenes Rohrelement **14**, ein zweites geschlossenes Rohrelement **15** und mehrere Bohrsegmente **16**, die mit dem ersten offenen Rohrelement 14 und dem zweiten geschlossenen Rohrelement 15 verbunden sind. Bei Bedarf können das erste offene Rohrelement 14 und das zweite geschlossene Rohrelement 15 noch zusätzlich miteinander verbunden sein.

Die Bohrsegmente 16 sind ringförmig angeordnet und bilden einen Bohrring mit Zwischenräumen. Der Schneidabschnitt 11 kann anstatt mehrerer Bohrsegmente 16 auch ein einzelnes Bohrsegment aufweisen, das in Form eines geschlossenen Bohrringes ausgebildet ist. Die Bohrsegmente 16 können mit dem ersten offenen Rohrelement 14 und dem zweiten geschlossenen Rohrelement 15 verschweißt, verlötet, verschraubt oder in einer anderen geeigneten Befestigungsart am ersten offenen Rohrelement 14 und am zweiten geschlossenen Rohrelement 15 befestigt sein. Der Bohrschaftabschnitt 12 umfasst einen rohrförmigen Bohrschaft **17**, einen Deckel **18** und ein Einsteckende **19**, über das die Bohrkrone 10 in einer Werkzeugaufnahme eines Kernbohrgerätes befestigt wird.

Die lösbare Verbindungseinrichtung 13 ist in Form einer kombinierten Steck-Dreh-Verbindung ausgebildet, wie sie in WO 2014/096359 A1 offenbart ist. Die lösbare Verbindungseinrichtung 13 umfasst ein erstes Steckelement **21**, das in den Schneidabschnitt 11 integriert ist, und ein zweites Steckelement **22**, das in den Bohrschaftabschnitt 12 integriert ist. Das erste und zweite Steckelement 21, 22 bilden eine Steckverbindung und werden zusätzlich über eine Drehverbindung gesichert. Die Drehverbindung umfasst mehrere Stiftelemente **23**, die in schlitzförmige Ausnehmungen **24** eingeführt werden. Die Stiftelemente 23 sind an einer Außenseite des zweiten Steckelementes 22 befestigt und die schlitzförmigen Ausnehmungen 24 sind im ersten Steckelement 21 vorgesehen. Der Schneidabschnitt 11 lässt sich vom Bediener einfach und schnell mit dem Bohrschaftabschnitt 12 verbinden. Dazu wird der Schneidabschnitt 11 mit dem ersten Steckelement 21 so auf das zweite Steckelement 22 des Bohrschaftabschnittes 12 gesteckt, dass die Stiftelemente 23 in den schlitzförmigen Ausnehmungen 24 angeordnet sind.

Im Bohrbetrieb wird die Bohrkrone 10 von einem Kernbohrgerät in einer Drehrichtung **25** um eine Drehachse **26** angetrieben, wobei die Drehachse 26 mit einer Längsachse des rohrförmigen Bohrschaftes 17 zusammenfällt. Während der Drehung der Bohrkrone 10 um die Drehachse 26 wird die Bohrkrone 10 entlang einer Vorschubrichtung **27** in ein Werkstück **28** bewegt, wobei die Vorschubrichtung 27 parallel zur Drehachse 26 verläuft. Die Bohrkrone 10 erzeugt im Werkstück 28 ein Bohrloch **31** mit einem Bohrlochdurchmesser **d**_{L} und einen Bohrkern **32** mit einem Kerndurchmesser **d**_{K}. Die Bohrsegmente 15 bilden einen Bohrring mit einem Außendurchmesser, der dem Bohrlochdurchmesser d_{L} entspricht, und einem Innendurchmesser, der dem Kerndurchmesser d_{K} entspricht.

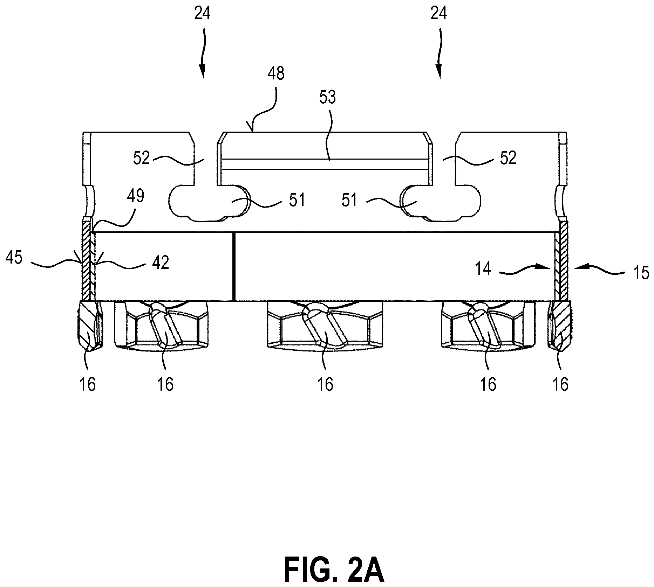

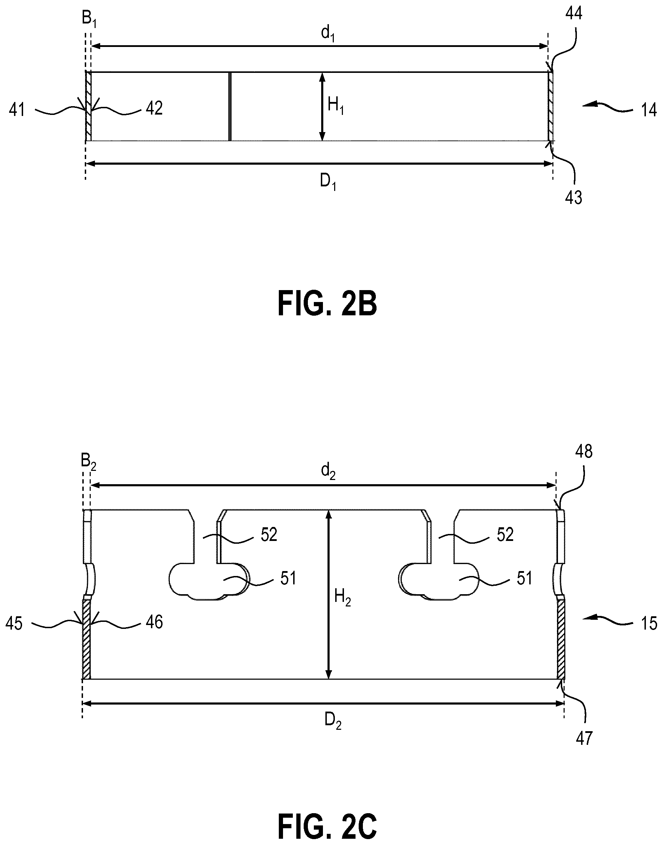

FIGN. 2A-C zeigen den erfindungsgemäßen Schneidabschnitt 11 der FIG. 1 mit dem ersten offenen Rohrelement 14, dem zweiten geschlossenen Rohrelement 15 und den Bohrsegmenten 16 in einem Längsschnitt entlang der Schnittlinie A-A in FIG. 1A. FIG. 2B zeigt das erste offene Rohrelement 14 und FIG. 2C das zweite geschlossene Rohrelement 15 des Schneidabschnittes 11.

Der Schneidabschnitt 11 wird aus dem ersten offenen Rohrelement 14, dem zweiten geschlossenen Rohrelement 15 und den Bohrsegmenten 16 hergestellt. Die Bohrsegmente 16 werden mit dem ersten offenen Rohrelement 14 und mit dem zweiten geschlossenen Rohrelement 15 verbunden. Dabei können die Bohrsegmente 16 mit dem ersten offenen Rohrelement 14 und dem zweiten geschlossenen Rohrelement 15 verschweißt, verlötet, verschraubt oder in einer anderen geeigneten Befestigungsart befestigt werden.

Das erste offene Rohrelement 14 ist in Form eines ersten Hohlzylinders mit einer ersten kreisringförmigen Querschnittsfläche ausgebildet. Das erste offene Rohrelement 14 umfasst eine erste äussere Mantelfläche **41**, eine erste innere Mantelfläche **42**, eine erste untere Stirnfläche **43** und eine erste obere Stirnfläche **44**. Die Abmessungen des ersten offenen Rohrelementes 14 sind durch eine erste Hohlzylinderhöhe **H₁**, einen ersten Innendurchmesser **d₁** und einen ersten Aussendurchmesser **D₁** definiert. Die Breite des ersten offenen Rohrelementes 14 ergibt sich als halbe Differenz des ersten Aussendurchmessers D₁ und des ersten Innendurchmessers d₁ und wird als erste Breite **B₁** bezeichnet.

Das zweite geschlossene Rohrelement 15 in Form eines zweiten Hohlzylinders mit einer zweiten kreisringförmigen Querschnittsfläche ausgebildet. Das zweite geschlossene Rohrelement 15 umfasst eine zweite äussere Mantelfläche **45**, eine zweite innere Mantelfläche **46**, eine zweite untere Stirnfläche **47** und eine zweite obere Stirnfläche **48**. Die Abmessungen des zweiten geschlossenen Rohrelementes 15 sind durch eine zweite Hohlzylinderhöhe H₂, einen zweiten Innendurchmesser **d₂** und einen zweiten Aussendurchmesser **D₂** definiert. Die Breite des zweiten geschlossenen Rohrelementes 15 ergibt sich als halbe Differenz des zweiten Aussendurchmessers D₂ und des zweiten Innendurchmessers d₂ und wird als zweite Breite **B₂** bezeichnet.

Die erste untere Stirnfläche 43 des ersten offenen Rohrelementes 14 und die zweite untere Stirnfläche 47 des zweiten geschlossenen Rohrelementes 15 werden bündig ausgerichtet. Die bündige Ausrichtung der ersten unteren Stirnfläche 43 und der zweiten unteren Stirnfläche 47 hat den Vorteil, dass eine breite Anbindungsfläche für die Bohrsegmente 16 entsteht, an der die Bohrsegmente 16 mit dem ersten offenen Rohrelement 14 und dem zweiten geschlossenen Rohrelement 15 verbunden werden können. Wenn die Bohrsegmente 16 mit der ersten unteren Stirnfläche 43 und der zweiten unteren Stirnfläche 47 verbunden werden, können das erste offene Rohrelement 14 und das zweite geschlossene Rohrelement 15 gleichzeitig mit den Bohrsegmenten 16 verbunden werden. Abhängig von den verwendeten Materialstärken kann es erforderlich sein, dass das erste offene Rohrelement 14 und das zweite geschlossene Rohrelement 15 zusätzlich miteinander verbunden werden.

Der Schneidabschnitt 11 ist so aufgebaut, dass die Kraftübertragung vom Bohrschaftabschnitt 12 über das erste offene Rohrelement 14 auf die Bohrsegmente 16 erfolgt und die Drehmomentübertragung vom Bohrschaftabschnitt 12 über das zweite geschlossene Rohrelement 15 auf die Bohrsegmente 16 erfolgt. Die erste obere Stirnfläche 44 des ersten offenen Rohrelementes 14 bildet an der Innenseite des Schneidabschnittes 11 eine ringförmige Anschlagschulter **49** für die Kraftübertragung von einem verbundenen Bohrschaftabschnitt. Die Drehmomentübertragung vom Bohrschaftabschnitt 12 auf den Schneidabschnitt 11 erfolgt über die Stiftelemente 23 und die schlitzförmigen Ausnehmungen 24. Das zweite geschlossene Rohrelement 15 des Schneidabschnittes 11 weist an der zweiten oberen Stirnfläche 48 mehrere schlitzförmige Ausnehmungen 24 auf. Die schlitzförmigen Ausnehmungen 24 umfassen jeweils einen Querschlitz **51** und einen Verbindungsschlitz **52**, wobei der Verbindungsschlitz 52 den Querschlitz 51 mit der zweiten oberen Stirnfläche 48 verbindet.

Das erste offene Rohrelement 14 kann aus einem ersten Material und das zweite geschlossene Rohrelement 15 aus einem zweiten Material hergestellt werden. Durch die Trennung des Schneidabschnittes 11 in das erste offene Rohrelement 14 und das zweite geschlossene Rohrelement 15 kann die Auswahl des ersten Materials und des zweiten Materials an die unterschiedlichen Anforderungen des ersten offenen Rohrelementes 14 und des zweiten geschlossenen Rohrelementes 15 angepasst werden. Das erste offene Rohrelement 14 hat den Vorteil, dass die erste äussere Mantelfläche 41 des ersten offenen Rohrelementes 14 mit der zweiten inneren Mantelfläche 46 des zweiten geschlossenen Rohrelementes 15 in Kontakt steht. Wenn die erste äussere Mantelfläche 41 und die zweite innere Mantelfläche 46 in Kontakt sind, können die Bohrsegmente 16 mit einer Schweißnaht mit dem ersten offenen Rohrelement 14 und dem zweiten geschlossenen Rohrelement 15 verbunden werden.

## Patentansprüche

1. Schneidabschnitt (11) für eine Bohrkrone (10), wobei der Schneidabschnitt (11) mit einem Bohrschaftabschnitt (12) der Bohrkrone (10) über eine lösbare Verbindungseinrichtung (13) verbindbar ist, aufweisend:
▪ ein erstes Rohrelement (14), das in Form eines ersten Hohlzylinders mit einer ersten äusseren Mantelfläche (41), einer ersten inneren Mantelfläche (42), einer ersten unteren Stirnfläche (43) und einer ersten oberen Stirnfläche (44) ausgebildet ist und das eine erste Hohlzylinderhöhe (H₁), einen ersten Innendurchmesser (d₁) und einen ersten Aussendurchmesser (D₁) aufweist,
▪ ein zweites geschlossenes Rohrelement (15), das in Form eines zweiten Hohlzylinders mit einer zweiten äusseren Mantelfläche (45), einer zweiten inneren Mantelfläche (46), einer zweiten unteren Stirnfläche (47) und einer zweiten oberen Stirnfläche (48) ausgebildet ist und das eine zweite Hohlzylinderhöhe (H₂), einen zweiten Innendurchmesser (d₂) und einen zweiten Aussendurchmesser (D₂) aufweist, wobei der erste Aussendurchmesser (D₁) grösser oder gleich dem zweiten Innendurchmesser (d₂) ist, und
▪ ein oder mehrere Bohrsegmente (16),
wobei das eine oder die mehreren Bohrsegmente (16) mit dem ersten Rohrelement (14) und dem zweiten geschlossenen Rohrelement (15) verbunden ist bzw. sind, wobei das zweite geschlossene Rohrelement (15) mindestens eine schlitzförmige Ausnehmung (24) aufweist, wobei die mindestens eine schlitzförmige Ausnehmung (24) einen Querschlitz (51) und einen Verbindungsschlitz (52) umfasst und der Verbindungsschlitz (52) den Querschlitz (51) mit der zweiten oberen Stirnfläche (48) des zweiten geschlossenen Rohrelementes (15) verbindet,
**dadurch gekennzeichnet, dass** das erste Rohrelement (14) in das zweite geschlossene Rohrelement (15) eingeschoben ist und das erste Rohrelement (14) offen ausgebildet ist.

2. Schneidabschnitt nach Anspruch 1, **dadurch gekennzeichnet, dass** die erste untere Stirnfläche (43) und die zweite untere Stirnfläche (47) bündig ausgerichtet sind.

3. Schneidabschnitt nach Anspruch 2, **dadurch gekennzeichnet, dass** das eine oder die mehreren Bohrsegmente (16) mit der ersten unteren Stirnfläche (43) und der zweiten unteren Stirnfläche (47) verbunden sind.

4. Schneidabschnitt nach Anspruch 1, **dadurch gekennzeichnet, dass** das zweite geschlossene Rohrelement (15) in der zweiten inneren Mantelfläche (46) mindestens eine Quernut (53) aufweist, die auf Höhe des Verbindungsschlitzes (52) angeordnet ist.

5. Schneidabschnitt nach einem der Ansprüche 1 bis 4, **dadurch gekennzeichnet, dass** das erste offene Rohrelement (14) in der ersten inneren Mantelfläche (42) mindestens eine Innenvertiefung aufweist, die sich über die erste Hohlzylinderhöhe (H₁) erstreckt.

6. Schneidabschnitt nach einem der Ansprüche 1 bis 5, **dadurch gekennzeichnet, dass** das erste offene Rohrelement (14) aus einem ersten Material und das zweite geschlossene Rohrelement (15) aus einem zweiten Material ausgebildet ist.

7. Schneidabschnitt nach einem der Ansprüche 1 bis 6, **dadurch gekennzeichnet, dass** das erste offene Rohrelement (14) als erstes umgeformtes Blechteil ausgebildet ist.

8. Schneidabschnitt nach einem der Ansprüche 1 bis 6, **dadurch gekennzeichnet, dass** das zweite geschlossene Rohrelement (15) als zweites umgeformtes Blechteil ausgebildet ist.

9. Schneidabschnitt nach Anspruch 8, **dadurch gekennzeichnet, dass** das zweite umgeformte Blechteil an gegenüberliegenden Seiten mindestens ein zweites positives Formschlusselement und mindestens ein entsprechendes zweites negatives Formschlusselement aufweist, wobei das mindestens eine zweite positive Formschlusselement und das mindestens eine zweite negative Formschlusselement beim zweiten geschlossenen Rohrelement formschlüssig verbunden sind.

10. Bohrkrone (10) mit einem Schneidabschnitt (11) nach einem der Ansprüche 1 bis 9 und einem Bohrschaftabschnitt (12), wobei der Schneidabschnitt (11) und der Bohrschaftabschnitt (12) über eine lösbare Verbindungseinrichtung (13) verbindbar sind.

## Claims

1. Cutting section (11) for a drill bit (10), wherein the cutting section (11) is connectable to a drill shaft section (12) of the drill bit (10) via a releasable connecting device (13), having:
▪ a first tubular element (14) which is in the form of a first hollow cylinder with a first outer lateral surface (41), a first inner lateral surface (42), a first lower end surface (43) and a first upper end surface (44) and which has a first hollow cylinder height (H₁), a first inside diameter (d₁) and a first outside diameter (D₁),
▪ a second closed tubular element (15) which is in the form of a second hollow cylinder with a second outer lateral surface (45), a second inner lateral surface (46), a second lower end surface (47) and a second upper end surface (48) and which has a second hollow cylinder height (H₂), a second inside diameter (d₂) and a second outside diameter (D₂), wherein the first outside diameter (D₁) is larger than or equal to the second inside diameter (d₂), and
▪ one or more drill segments (16),
wherein the one or the more drill segments (16) is or are connected to the first tubular element (14) and to the second closed tubular element (15), wherein the second closed tubular element (15) has at least one slot-shaped recess (24), wherein the at least one slot-shaped recess (24) comprises a transverse slot (51) and a connecting slot (52), and the connecting slot (52) connects the transverse slot (51) to the second upper end surface (48) of the second closed tubular element (15),
**characterized in that** the first tubular element (14) is pushed into the second closed tubular element (15), and the first tubular element (14) is open.

2. Cutting section according to Claim 1, **characterized in that** the first lower end surface (43) and the second lower end surface (47) are aligned flush.

3. Cutting section according to Claim 2, **characterized in that** the one or the more drill segments (16) are connected to the first lower end surface (43) and to the second lower end surface (47).

4. Cutting section according to Claim 1, **characterized in that** the second closed tubular element (15) in the second inner lateral surface (46) has at least one transverse groove (53) which is arranged level with the connecting slot (52).

5. Cutting section according to one of Claims 1 to 4, **characterized in that** the first open tubular element (14) in the first inner lateral surface (42) has at least one internal depression which extends over the first hollow cylinder height (H₁).

6. Cutting section according to one of Claims 1 to 5, **characterized in that** the first open tubular element (14) is formed from a first material and the second closed tubular element (15) from a second material.

7. Cutting section according to one of Claims 1 to 6, **characterized in that** the first open tubular element (14) is in the form of a first formed sheet metal part.

8. Cutting section according to one of Claims 1 to 6, **characterized in that** the second closed tubular element (15) is in the form of a second formed sheet metal part.

9. Cutting section according to Claim 8, **characterized in that** the second formed sheet metal part has at least one second positive form-fitting element and at least one corresponding second negative form-fitting element on opposite sides, wherein the at least one second positive form-fitting element and the at least one second negative form-fitting element are connected in a form-fitting manner in the second closed tubular element.

10. Drill bit (10) with a cutting section (11) according to one of Claims 1 to 9 and with a drill shaft section (12), wherein the cutting section (11) and the drill shaft section (12) are connectable via a releasable connecting device (13).

## Revendications

1. Section de coupe (11) pour un trépan de forage (10), la section de coupe (11) étant apte à être reliée à une section (12) de tige de forage du trépan de forage (10) par un dispositif de liaison amovible (13), comprenant :
▪ un premier élément tubulaire (14) qui est réalisé sous la forme d'un premier cylindre creux avec une première surface d'enveloppe extérieure (41), une première surface d'enveloppe intérieure (42), une première surface frontale inférieure (43) et une première surface frontale supérieure (44) et qui présente une première hauteur de cylindre creux (H₁), un premier diamètre intérieur (d₁) et un premier diamètre extérieur (D₁),
▪ un deuxième élément tubulaire fermé (15) qui est réalisé sous la forme d'un deuxième cylindre creux avec une deuxième surface d'enveloppe extérieure (45), une deuxième surface d'enveloppe intérieure (46), une deuxième surface frontale inférieure (47) et une deuxième surface frontale supérieure (48) et qui présente une deuxième hauteur de cylindre creux (H₂), un deuxième diamètre intérieur (d₂) et un deuxième diamètre extérieur (D₂), le premier diamètre extérieur (D₁) étant supérieur ou égal au deuxième diamètre intérieur (d₂), et
▪ un ou plusieurs segments de forage (16),
le ou les segments de forage (16) étant reliés au premier élément tubulaire (14) et au deuxième élément tubulaire fermé (15), respectivement, le deuxième élément tubulaire fermé (15) présentant au moins un évidement en forme de fente (24), ledit au moins un évidement en forme de fente (24) comprenant une fente transversale (51) et une fente de liaison (52) et la fente de liaison (52) reliant la fente transversale (51) à la deuxième surface frontale supérieure (48) du deuxième élément tubulaire fermé (15),
**caractérisé en ce que** le premier élément tubulaire (14) est inséré dans le deuxième élément tubulaire fermé (15) et le premier élément tubulaire (14) est formé de manière ouverte.

2. Section de coupe selon la revendication 1, **caractérisée en ce que** la première surface frontale inférieure (43) et la deuxième surface frontale inférieure (47) sont alignées.

3. Section de coupe selon la revendication 2, **caractérisée en ce que** le ou les segments de forage (16) sont reliés à la première surface frontale inférieure (43) et à la deuxième surface frontale inférieure (47).

4. Section de coupe selon la revendication 1, **caractérisé en ce que** le deuxième élément tubulaire fermé (15) comporte, dans la deuxième surface d'enveloppe intérieure (46), au moins une rainure transversale (53) située au niveau de la fente de liaison (52).

5. Section de coupe selon l'une des revendications 1 à 4, **caractérisée en ce que** le premier élément tubulaire ouvert (14) présente dans la première surface d'enveloppe intérieure (42) au moins une cavité intérieure qui s'étend sur la première hauteur de cylindre creux (H₁).

6. Section de coupe selon l'une des revendications 1 à 5, **caractérisée en ce que** le premier élément tubulaire ouvert (14) est réalisé en un premier matériau et le deuxième élément tubulaire fermé (15) est réalisé en un deuxième matériau.

7. Section de coupe selon l'une des revendications 1 à 6, **caractérisée en ce que** le premier élément tubulaire ouvert (14) est réalisé sous la forme d'une première pièce de tôle déformée.

8. Section de coupe selon l'une des revendications 1 à 6, **caractérisée en ce que** le deuxième élément tubulaire fermé (15) est réalisé sous la forme d'une deuxième pièce de tôle déformée.

9. Section de coupe selon la revendication 8, **caractérisée en ce que** la deuxième pièce en tôle déformée présente, sur des côtés opposés, au moins un deuxième élément positif à engagement par complémentarité de forme et au moins un deuxième élément négatif à engagement par complémentarité de forme correspondant, ledit au moins un deuxième élément positif à engagement par complémentarité de forme et ledit au moins un deuxième élément négatif à engagement par complémentarité de forme étant reliés par engagement par complémentarité de forme dans le deuxième élément tubulaire fermé.

10. Trépan de forage (10) avec une section de coupe (11) selon l'une des revendications 1 à 9 et une section (12) de tige de forage, la section de coupe (11) et la section (12) de tige de forage étant aptes à être reliées par un dispositif de liaison amovible (13).
